# FASCICULE DE BREVET EUROPEEN

(11) **EP 3 528 310 B1**
(45) Date de publication et mention de la délivrance du brevet: **11.06.2025**
(21) Numéro de dépôt: 19156974.8
(22) Date de dépôt: 13.02.2019
(51) Int. Cl.: E06B 9/17, E06B 9/42, E06B 9/50, E06B 9/72, E06B 9/24, H01M 50/213, E06B 9/174

(54) **DISPOSITIF DE STOCKAGE D'ÉNERGIE ÉLECTRIQUE, DISPOSITIF D'ENTRAÎNEMENT MOTORISÉ ET INSTALLATION DOMOTIQUE ASSOCIÉS**
SPEICHERVORRICHTUNG FÜR ELEKTRISCHE ENERGIE, ENTSPRECHENDE MOTORISIERTE ANTRIEBSVORRICHTUNG UND ENTSPRECHENDE HAUSTECHNIKANLAGE
DEVICE FOR STORING ELECTRICAL ENERGY, MOTORISED DRIVE DEVICE AND ASSOCIATED HOME AUTOMATION INSTALLATION

(30) Priorité: 14.02.2018 FR 1851236
(43) Date de publication de la demande: 21.08.2019
(73) Titulaire: SIMU, 70100 Arc-lès-Gray (FR)
(72) Inventeur: PENEY, Clément, 70130 FRESNE SAINT MAMES (FR); PLATRET, Adrien, 63350 BULHON (FR)
(74) Mandataire: Lavoix

(56) Documents cités:
- EP-A1- 2 937 505
- WO-A1-2014/143655
- US-A1- 2010 092 855
- US-A1- 2014 352 897
- US-A1- 2016 123 076
- US-A1- 2016 374 497
- US-B1- 6 446 693
- US-B1- 8 371 358

## Description

La présente invention concerne un dispositif de stockage d'énergie électrique pour une installation domotique de fermeture ou de protection solaire et un dispositif d'entraînement motorisé pour une installation domotique de fermeture ou de protection solaire comprenant un tel dispositif de stockage d'énergie électrique.

La présente invention concerne également une installation domotique de fermeture ou de protection solaire comprenant un écran enroulable, au moyen d'un tel dispositif d'entraînement motorisé, sur un tube d'enroulement entraîné en rotation par un actionneur électromécanique.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire, tel qu'un volet, une porte, une grille, un store ou tout autre matériel équivalent, appelé par la suite écran.

On connaît déjà le document FR 2 910 523 A1 qui décrit un dispositif d'entraînement motorisé pour une installation domotique de fermeture ou de protection solaire. Ce dispositif d'entraînement motorisé comprend un actionneur électromécanique et un dispositif d'alimentation en énergie électrique autonome. Le dispositif d'alimentation en énergie électrique autonome comprend un dispositif de stockage d'énergie électrique. L'actionneur électromécanique est relié électriquement au dispositif de stockage d'énergie électrique. Le dispositif de stockage d'énergie électrique comprend un boîtier, une batterie, un premier support et un deuxième support. La batterie est disposée à l'intérieur du boîtier, dans une configuration assemblée du dispositif de stockage d'énergie électrique. Le premier support est disposé au niveau d'une première extrémité du boîtier, dans la configuration assemblée du dispositif de stockage d'énergie électrique. Le deuxième support est disposé au niveau d'une deuxième extrémité du boîtier, dans la configuration assemblée du dispositif de stockage d'énergie électrique. La deuxième extrémité du boîtier est opposée à la première extrémité du boîtier.

Ce dispositif d'entraînement motorisé présente l'inconvénient de réaliser l'assemblage du dispositif de stockage d'énergie électrique en insérant la batterie à l'intérieur du boîtier, puis en insérant chacun des premier et deuxième supports à l'intérieur du boîtier, puis en fixant chacun des premier et deuxième supports sur un élément de l'installation domotique, tel qu'un mur d'un bâtiment ou une paroi d'un coffre d'un dispositif d'occultation, par collage, vissage ou rivetage, et enfin en emboîtant un capot au niveau de chacun des premier et deuxième supports.

De cette manière, la batterie ne peut pas être retirée du boîtier sans le démontage des premier et deuxième supports par rapport à l'élément de l'installation domotique, puisque les premier et deuxième supports sont insérés directement dans le boîtier et empêchent le coulissement de la batterie en dehors du boîtier.

Par conséquent, suite à cet assemblage du dispositif de stockage d'énergie électrique sur l'élément de l'installation domotique, la batterie ne peut pas être retirée sans engendrer une détérioration du dispositif de stockage d'énergie électrique ou de l'élément de l'installation domotique.

Dans le cas où la fixation de chacun des premier et deuxième supports sur l'élément de l'installation domotique est mise en œuvre par collage, la détérioration du dispositif de stockage d'énergie électrique ou de l'élément de l'installation domotique est due aux propriétés d'un adhésif, permanent et non réutilisable, utilisé pour solidariser l'élément de l'installation domotique avec les premier et deuxième supports.

Dans le cas où la fixation de chacun des premier et deuxième supports sur l'élément de l'installation domotique est mise en œuvre par vissage ou par rivetage, les premier et deuxième supports peuvent être endommagés ou cassés lors du démontage du dispositif de stockage d'énergie électrique par rapport à l'élément de l'installation domotique.

On connaît également le document US 2016/0374497 A1 qui décrit un dispositif de stockage d'énergie électrique pour une installation domotique de fermeture ou de protection solaire. Le dispositif de stockage d'énergie électrique comprend un boîtier, en particulier un tube creux, une pluralité de batteries et un support. La pluralité de batteries est disposée à l'intérieur du boîtier, dans une configuration assemblée du dispositif de stockage d'énergie électrique. Le support est disposé au niveau d'une extrémité du boîtier, dans la configuration assemblée du dispositif de stockage d'énergie électrique. Le dispositif de stockage d'énergie électrique comprend également un premier bouchon et un deuxième bouchon. Le premier bouchon est assemblé avec le boîtier au niveau d'une première extrémité du boîtier, dans la configuration assemblée du dispositif de stockage d'énergie électrique. Le deuxième bouchon est assemblé avec le boîtier au niveau d'une deuxième extrémité du boîtier, dans la configuration assemblée du dispositif de stockage d'énergie électrique. Par ailleurs, le dispositif de stockage d'énergie électrique est logé à l'intérieur d'un élément d'entraînement rotatif, lequel loge également un actionneur électromécanique. Un embout, ornemental ou décoratif, est assemblé à chacune des extrémités de l'élément d'entraînement rotatif, notamment par encliquetage élastique, de sorte à obturer une ouverture de l'élément d'entraînement rotatif, tout en améliorant l'aspect esthétique de l'installation domotique de fermeture ou de protection solaire. Par conséquent, les embouts ne sont pas disposés au niveau des extrémités du boîtier du dispositif de stockage d'énergie électrique mais au niveau des extrémités de l'élément d'entraînement rotatif. En outre, l'élément d'entraînement rotatif est relié à des supports muraux en positionnant un palier compressible dans un élément de montage de chacun des supports muraux et en serrant une plaque de palier contre le palier compressible, de sorte que le diamètre du palier compressible soit forcé de se dilater et de s'engager fermement contre la surface intérieure de l'élément de montage. Une fois serré par la plaque de palier, le palier compressible est encore maintenu en place en serrant une vis de blocage à travers l'élément de montage et dans la surface extérieure du palier compressible. Par conséquent, les plaques de palier ne sont pas disposées respectivement au niveau des extrémités du boîtier du dispositif de stockage d'énergie électrique mais au niveau des extrémités de l'élément d'entraînement rotatif. Ce dispositif de stockage d'énergie électrique est complexe à monter et à démonter.

La présente invention a pour but de résoudre les inconvénients précités et de proposer un dispositif de stockage d'énergie électrique pour une installation domotique de fermeture ou de protection solaire, un dispositif d'entraînement motorisé pour une installation domotique de fermeture ou de protection solaire comprenant un tel dispositif de stockage d'énergie électrique, ainsi qu'une installation domotique de fermeture ou de protection solaire comprenant un tel dispositif d'entraînement motorisé, permettant, d'une part, de garantir un montage et un démontage simple du dispositif de stockage d'énergie électrique, de sorte à remplacer ou recharger aisément une batterie, sans engendrer de détérioration de l'installation domotique.

A cet égard, la présente invention vise, selon un premier aspect, un dispositif de stockage d'énergie électrique pour une installation domotique de fermeture ou de protection solaire, le dispositif de stockage d'énergie électrique comprenant au moins :
- un boîtier,
- une batterie, la batterie étant disposée à l'intérieur du boîtier, dans une configuration assemblée du dispositif de stockage d'énergie électrique,
- un premier support, le premier support étant disposé au niveau d'une première extrémité du boîtier, dans la configuration assemblée du dispositif de stockage d'énergie électrique, et
- un premier bouchon et un deuxième bouchon, le premier bouchon étant assemblé avec le boîtier au niveau de la première extrémité du boîtier, dans la configuration assemblée du dispositif de stockage d'énergie électrique, le deuxième bouchon étant assemblé avec le boîtier au niveau de la deuxième extrémité du boîtier, dans la configuration assemblée du dispositif de stockage d'énergie électrique.

Selon l'invention, le dispositif de stockage d'énergie électrique comprend également un deuxième support, le deuxième support étant disposé au niveau d'une deuxième extrémité du boîtier, dans la configuration assemblée du dispositif de stockage d'énergie électrique, la deuxième extrémité du boîtier étant opposée à la première extrémité du boîtier. En outre, chacun des premier et deuxième supports est assemblé avec l'un des premier et deuxième bouchons au moyen d'éléments de fixation par encliquetage élastique, dans la configuration assemblée du dispositif de stockage d'énergie électrique.

Ainsi, un tel assemblage par encliquetage élastique permet un montage et un démontage simples, rapides et intuitifs du dispositif de stockage d'énergie électrique et, plus particulièrement, du boîtier et de la batterie par rapport aux premier et deuxième supports, de sorte à pouvoir remplacer ou recharger la batterie, sans nécessiter l'utilisation d'un outillage spécifique et sans engendrer de détérioration de l'installation domotique.

De cette manière, un tel assemblage par encliquetage élastique permet de simplifier une intervention de maintenance ou de réparation du dispositif de stockage d'énergie électrique, puisque les premier et deuxième supports restent en position par rapport à un élément de l'installation domotique.

Par ailleurs, chacun des premier et deuxième bouchons permet de garantir une étanchéité au niveau de chacune des première et deuxième extrémités du boîtier, en particulier vis-à-vis de la batterie disposée à l'intérieur du boîtier, dans la configuration assemblée du dispositif de stockage d'énergie électrique.

Selon une caractéristique avantageuse de l'invention, les éléments de fixation par encliquetage élastique comprennent une languette ménagée dans l'un des premier et deuxième supports configurée pour coopérer avec un logement ménagé dans l'un des premier et deuxième bouchons.

Selon une autre caractéristique avantageuse de l'invention, chacun des premier et deuxième supports est réalisé sous la forme d'une équerre.

Selon une autre caractéristique avantageuse de l'invention, les premier et deuxième supports sont symétriques par rapport au boîtier, dans la configuration assemblée du dispositif de stockage d'énergie électrique.

Selon une autre caractéristique avantageuse de l'invention, le dispositif de stockage d'énergie électrique comprend également un câble d'alimentation électrique. En outre, au moins l'un des premier et deuxième bouchons comprend un connecteur électrique configuré pour coopérer avec un premier connecteur électrique du câble d'alimentation électrique.

Selon une autre caractéristique avantageuse de l'invention, le dispositif de stockage d'énergie électrique comprend également un premier capot et un deuxième capot. En outre, chacun des premier et deuxième capots est configuré pour coopérer avec l'un des premier et deuxième supports, le premier capot étant disposé au niveau de la première extrémité du boîtier, dans la configuration assemblée du dispositif de stockage d'énergie électrique, le deuxième capot étant disposé au niveau de la deuxième extrémité du boîtier, dans la configuration assemblée du dispositif de stockage d'énergie électrique.

Selon une autre caractéristique avantageuse de l'invention, chacun des premier et deuxième supports est configuré pour être fixé sur une paroi d'un élément de l'installation domotique au moyen d'au moins un élément de fixation.

Selon une autre caractéristique avantageuse de l'invention, le premier support ou le deuxième support ou chacun des premier et deuxième supports comprend un serre-câble. En outre, le serre-câble est configuré pour coopérer avec le câble d'alimentation électrique.

La présente invention vise, selon un deuxième aspect, un dispositif d'entraînement motorisé pour une installation domotique de fermeture ou de protection solaire comprenant au moins :
- un actionneur électromécanique,
- un dispositif d'alimentation en énergie électrique autonome, le dispositif d'alimentation en énergie électrique autonome comprenant au moins un dispositif de stockage d'énergie électrique, selon l'invention et tel que mentionné ci-dessus, l'actionneur électromécanique étant relié électriquement au dispositif de stockage d'énergie électrique.

Ce dispositif d'entraînement motorisé présente des caractéristiques et avantages analogues à ceux décrits précédemment en relation avec le dispositif de stockage d'énergie électrique selon l'invention.

La présente invention vise, selon un troisième aspect, une installation domotique de fermeture ou de protection solaire comprenant un écran enroulable au moyen d'un dispositif d'entraînement motorisé, conforme à l'invention et tel que mentionné ci-dessus, sur un tube d'enroulement entraîné en rotation par un actionneur électromécanique.

Cette installation domotique présente des caractéristiques et avantages analogues à ceux décrits précédemment en relation avec le dispositif d'entraînement motorisé selon l'invention.

Selon une autre caractéristique avantageuse de l'invention, la paroi de l'élément de l'installation domotique est un mur d'un bâtiment, une glissière latérale d'un dispositif d'occultation, un coffre d'un dispositif d'occultation ou un cadre dormant d'une fenêtre ou d'une porte.

D'autres particularités et avantages de l'invention apparaîtront encore dans la description ci-après.

Aux dessins annexés, donnés à titre d'exemples non limitatifs :
- la figure 1 est une vue schématique en coupe transversale d'une installation domotique conforme à un mode de réalisation de l'invention ;
- la figure 2 est une vue schématique en perspective de l'installation domotique illustrée à la figure 1 ;
- la figure 3 est une vue schématique en coupe axiale et partielle de l'installation domotique illustrée aux figures 1 et 2, montrant un actionneur électromécanique tubulaire de l'installation ;
- la figure 4 est une vue schématique en perspective de l'installation domotique telle qu'illustrée aux figures 1 à 3, montrant un dispositif de stockage d'énergie électrique selon un premier exemple de positionnement dans l'installation ;
- la figure 5 est une vue analogue à la figure 4, selon un autre angle de vue, illustrant le dispositif de stockage d'énergie électrique selon un deuxième exemple de positionnement dans l'installation, où une partie d'un coffre d'un dispositif d'occultation a été ôté, ainsi qu'un écran du dispositif d'occultation, un tube d'enroulement et un dispositif d'entraînement motorisé ;
- la figure 6 est une vue schématique en perspective du dispositif de stockage d'énergie électrique illustré aux figures 4 et 5 ;
- la figure 7 est une vue schématique en perspective et éclatée du dispositif de stockage d'énergie électrique illustré aux figures 4 à 6 ;
- la figure 8 est une vue schématique en perspective et partielle du dispositif de stockage d'énergie électrique illustré aux figures 4 à 7, où un capot a été ôté ;
- la figure 9 est une vue schématique en perspective d'une partie du dispositif de stockage d'énergie électrique illustré aux figures 4 à 8 comprenant un boîtier, une batterie, un premier bouchon, un deuxième bouchon et un connecteur électrique ;
- la figure 10 est une vue schématique en perspective et éclatée de la partie du dispositif de stockage d'énergie électrique illustré à la figure 9 ;
- la figure 11 est une vue schématique en perspective d'un support du dispositif de stockage d'énergie électrique illustré aux figures 4 à 10 ;
- la figure 12 est une vue schématique en perspective d'un bouchon du dispositif de stockage d'énergie électrique illustré aux figures 4 à 10 ;
- la figure 13 est une vue schématique en perspective d'un capot du dispositif de stockage d'énergie électrique illustré aux figures 4 à 10 ; et
- la figure 14 est une vue à plus grande échelle du détail A de la figure 7.

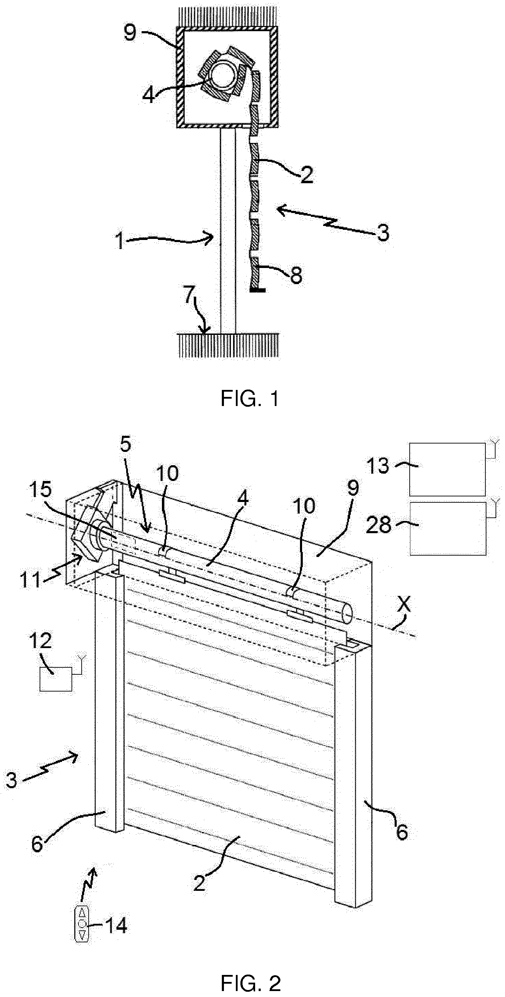

On décrit tout d'abord, en référence aux figures 1 et 2, une installation domotique conforme à l'invention et installée dans un bâtiment comportant une ouverture 1, fenêtre ou porte, équipée d'un écran 2 appartenant à un dispositif d'occultation 3, en particulier un volet roulant motorisé.

Le dispositif d'occultation 3 peut être un volet roulant, un store en toile ou avec des lames orientables, ou encore un portail roulant. La présente invention s'applique à tous les types de dispositif d'occultation.

On décrit, en référence aux figures 1 et 2, un volet roulant conforme à un mode de réalisation de l'invention.

L'écran 2 du dispositif d'occultation 3 est enroulé sur un tube d'enroulement 4 entraîné par un dispositif d'entraînement motorisé 5. L'écran 2 est mobile entre une position enroulée, en particulier haute, et une position déroulée, en particulier basse.

L'écran 2 mobile du dispositif d'occultation 3 est un écran de fermeture, d'occultation et/ou de protection solaire, s'enroulant sur le tube d'enroulement 4 dont le diamètre intérieur est sensiblement supérieur au diamètre externe d'un actionneur électromécanique 11, de sorte que l'actionneur électromécanique 11 puisse être inséré dans le tube d'enroulement 4, lors de l'assemblage du dispositif d'occultation 3.

Le dispositif d'entraînement motorisé 5 comprend l'actionneur électromécanique 11, en particulier de type tubulaire, permettant de mettre en rotation le tube d'enroulement 4, de sorte à déplacer, en particulier dérouler ou enrouler, l'écran 2 du dispositif d'occultation 3.

Le dispositif d'occultation 3 comprend le tube d'enroulement 4 pour enrouler l'écran 2. Dans l'état monté, l'actionneur électromécanique 11 est inséré dans le tube d'enroulement 4.

De manière connue, le volet roulant, qui forme le dispositif d'occultation 3, comporte un tablier comprenant des lames horizontales articulées les unes aux autres, formant l'écran 2 du volet roulant 3, et guidées par deux glissières latérales 6. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8, par exemple en forme de L, du tablier 2 du volet roulant 3 contre un bord d'un coffre 9 du volet roulant 3 ou à l'arrêt de la lame d'extrémité finale 8 dans une position de fin de course haute programmée. En outre, la position basse déroulée correspond à la mise en appui de la lame d'extrémité finale 8 du tablier 2 du volet roulant 3 contre un seuil 7 de l'ouverture 1 ou à l'arrêt de la lame d'extrémité finale 8 dans une position de fin de course basse programmée.

La première lame du volet roulant 3, opposée à la lame d'extrémité, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Le dispositif d'entraînement motorisé 5 est commandé par une unité de commande. L'unité de commande peut être, par exemple, une unité de commande locale 12, où l'unité de commande locale 12 peut être reliée en liaison filaire ou non filaire avec une unité de commande centrale 13. L'unité de commande centrale 13 pilote l'unité de commande locale 12, ainsi que d'autres unités de commande locales similaires et réparties dans le bâtiment.

L'unité de commande centrale 13 peut être en communication avec une station météorologique déportée à l'extérieur du bâtiment, incluant, notamment, un ou plusieurs capteurs pouvant être configurés pour déterminer, par exemple, une température, une luminosité ou encore une vitesse de vent.

Une télécommande 14, pouvant être un type d'unité de commande locale, et pourvue d'un clavier de commande, qui comprend des éléments de sélection et d'affichage, permet, en outre, à un utilisateur d'intervenir sur l'actionneur électromécanique 11 et/ou l'unité de commande centrale 13.

Le dispositif d'entraînement motorisé 5 est, de préférence, configuré pour exécuter les commandes de déroulement ou d'enroulement de l'écran 2 du dispositif d'occultation 3, pouvant être émises, notamment, par la télécommande 14.

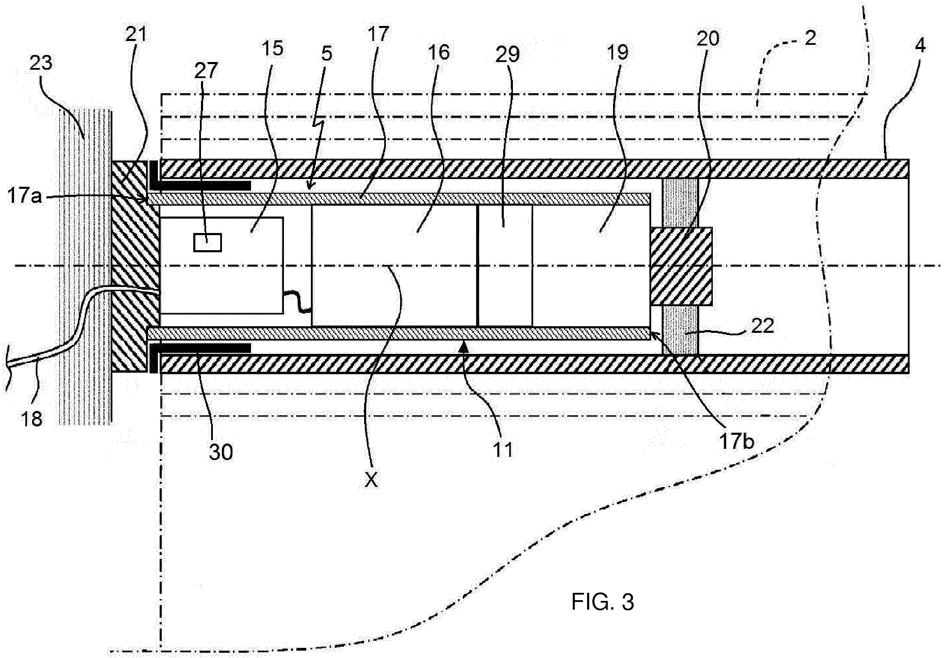

On décrit à présent, plus en détail et en référence à la figure 3, le dispositif d'entrainement motorisé 5, y compris l'actionneur électromécanique 11, appartenant à l'installation domotique des figures 1 et 2.

L'actionneur électromécanique 11 comprend un moteur électrique 16. Le moteur électrique 16 comprend un rotor et un stator, non représentés et positionnés de manière coaxiale autour d'un axe de rotation X, qui est également l'axe de rotation du tube d'enroulement 4 en configuration montée du dispositif d'entraînement motorisé 5.

Des moyens de commande de l'actionneur électromécanique 11, permettant le déplacement de l'écran 2 du dispositif d'occultation 3, sont constitués par au moins une unité électronique de contrôle 15. Cette unité électronique de contrôle 15 est apte à mettre en fonctionnement le moteur électrique 16 de l'actionneur électromécanique 11, et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

L'unité électronique de contrôle 15 comprend également un module de communication 27, en particulier de réception d'ordres de commande, les ordres de commande étant émis par un émetteur d'ordres, tel que la télécommande 14 destinée à commander l'actionneur électromécanique 11 ou l'une des unités de commande locale 12 ou centrale 13.

Préférentiellement, le module de communication 27 de l'unité électronique de contrôle 15 est de type sans fil. En particulier, le module de communication 27 est configuré pour recevoir des ordres de commande radioélectriques.

Le module de communication 27 peut également permettre la réception d'ordres de commande transmis par des moyens filaires.

L'unité de commande centrale 13, l'unité électronique de contrôle 15 ou l'unité de commande locale 12 peuvent également être en communication avec un serveur 28, de sorte à contrôler l'actionneur électromécanique 11 suivant des données mises à disposition à distance par l'intermédiaire d'un réseau de communication, en particulier un réseau internet pouvant être relié au serveur 28.

Les moyens de commande de l'actionneur électromécanique 11 comprennent des moyens matériels et/ou logiciels.

A titre d'exemple nullement limitatif, les moyens matériels peuvent comprendre au moins un microcontrôleur.

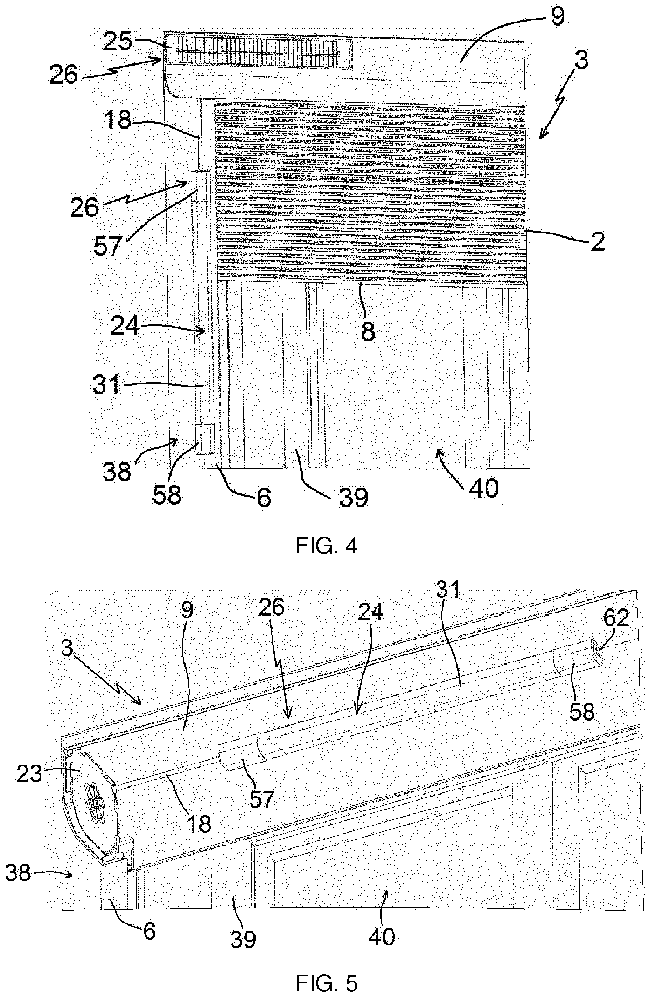

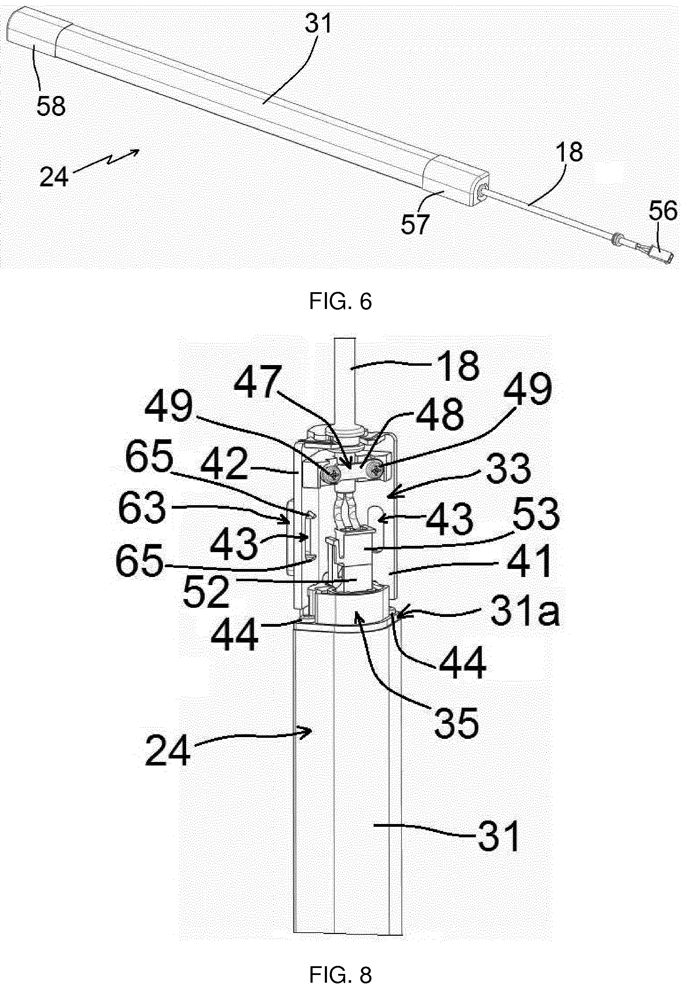

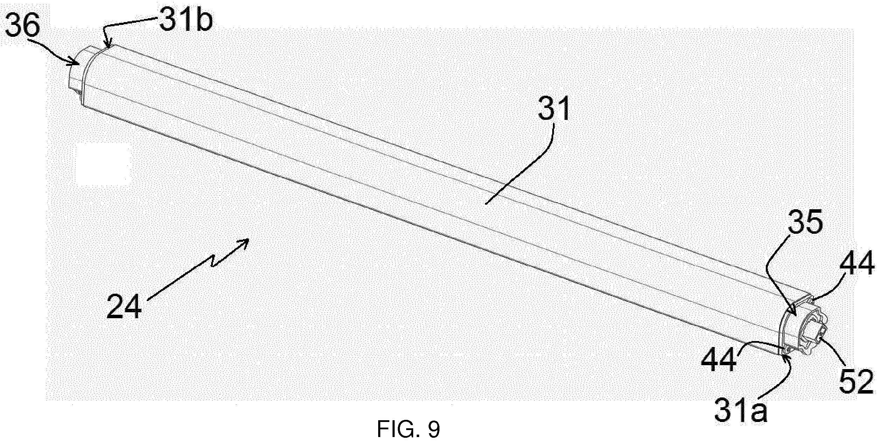

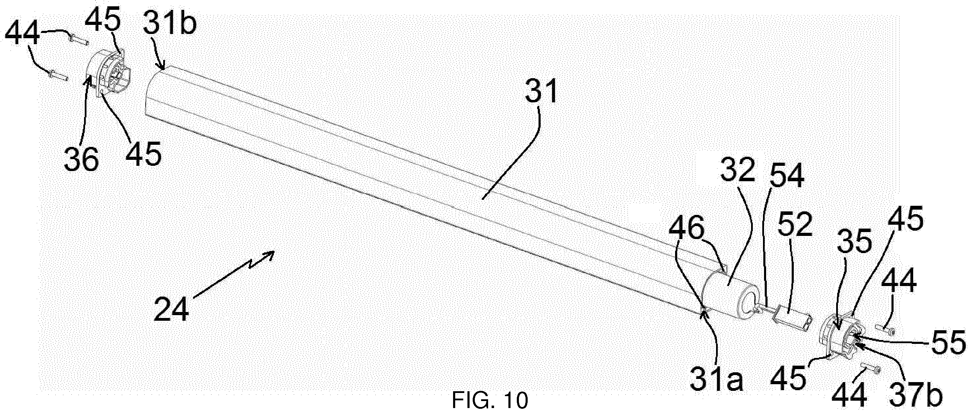

L'actionneur électromécanique 11 est alimenté en énergie électrique au moyen d'un dispositif de stockage d'énergie électrique 24, tel qu'illustré aux figures 4 à 10.

Ici et comme illustré à la figure 4, le dispositif de stockage d'énergie électrique 24 peut être rechargé par au moins une cellule photovoltaïque 25.

Dans la description qui suit, l'expression « la cellule photovoltaïque 25 » est utilisée pour désigner une ou plusieurs cellules photovoltaïques en fonction de la configuration d'un dispositif d'alimentation en énergie électrique autonome 26.

Ici, l'actionneur électromécanique 11 est relié électriquement au dispositif de stockage d'énergie électrique 24 au moyen d'au moins un câble d'alimentation électrique 18, de sorte à permettre l'alimentation en énergie électrique de l'actionneur électromécanique 11 à partir du dispositif de stockage d'énergie électrique 24.

Un carter 17 de l'actionneur électromécanique 11 est, préférentiellement, de forme cylindrique.

Dans un mode de réalisation, le carter 17 est réalisé dans un matériau métallique.

La matière du carter de l'actionneur électromécanique n'est pas limitative et peut être différente. Il peut s'agir, en particulier, d'une matière plastique.

Avantageusement, l'actionneur électromécanique 11 comprend également un réducteur 19, un frein 29 et un arbre de sortie 20.

Avantageusement, le réducteur 19 comprend au moins un étage de réduction. Ledit au moins un étage de réduction peut être un train d'engrenages de type épicycloïdal.

Le type et le nombre d'étages de réduction du réducteur ne sont pas limitatifs.

A titre d'exemple nullement limitatif, le frein 29 peut être un frein à ressort, un frein à came ou un frein électromagnétique.

L'actionneur électromécanique 11 peut également comprendre un dispositif de détection de fin de course et/ou d'obstacle, pouvant être mécanique ou électronique.

Avantageusement, le moteur électrique 16, le frein 29 et le réducteur 19 sont montés à l'intérieur du carter 17 de l'actionneur électromécanique 11.

Le tube d'enroulement 4 est entraîné en rotation autour de l'axe de rotation X et du carter 17 de l'actionneur électromécanique 11 soutenu par l'intermédiaire de deux liaisons pivot. La première liaison pivot est réalisée au niveau d'une première extrémité du tube d'enroulement 4 au moyen d'une couronne 30 insérée autour d'une première extrémité 17a du carter 17 de l'actionneur électromécanique 11. La couronne 30 permet ainsi de réaliser un palier. La deuxième liaison pivot, non représentée à la figure 3, est réalisée au niveau d'une deuxième extrémité du tube d'enroulement 4, non visible sur cette figure.

Avantageusement, l'actionneur électromécanique 11 comprend un support de couple 21. Le support de couple 21 est en saillie au niveau de la première extrémité 17a du carter 17 de l'actionneur électromécanique 11, en particulier l'extrémité 17a du carter 17 recevant la couronne 30. Le support de couple 21 de l'actionneur électromécanique 11 permet ainsi de fixer l'actionneur électromécanique 11 sur un bâti 23, en particulier à une joue du coffre 9.

En outre, le support de couple 21 de l'actionneur électromécanique 11 peut permettre d'obturer la première extrémité 17a du carter 17.

Par ailleurs, le support de couple 21 de l'actionneur électromécanique 11 peut permettre de supporter l'unité électronique de contrôle 15. L'unité électronique de contrôle 15 peut être alimentée en énergie électrique au moyen du câble d'alimentation électrique 18 connecté électriquement au dispositif de stockage d'énergie électrique 24.

Ici, et tel qu'illustré à la figure 3, l'unité électronique de contrôle 15 est ainsi disposée, autrement dit intégrée, à l'intérieur du carter 17 de l'actionneur électromécanique 11.

En variante, non représentée, l'unité électronique de contrôle 15 est disposée à l'extérieur du carter 17 de l'actionneur électromécanique 11 et, en particulier, montée sur le bâti 23 ou dans le support de couple 21.

L'arbre de sortie 20 de l'actionneur électromécanique 11 est disposé à l'intérieur du tube d'enroulement 4 et au moins en partie à l'extérieur du carter 17 de l'actionneur électromécanique 11.

Une extrémité de l'arbre de sortie 20 est en saillie par rapport au carter 17 de l'actionneur électromécanique 11, en particulier par rapport à une deuxième extrémité 17b du carter 17 opposée à la première extrémité 17a.

L'arbre de sortie 20 de l'actionneur électromécanique 11 est configuré pour entraîner en rotation un élément de liaison 22 relié au tube d'enroulement 4. L'élément de liaison 22 est réalisé sous la forme d'une roue.

Lors de la mise en fonctionnement de l'actionneur électromécanique 11, le moteur électrique 16 et le réducteur 19 entraînent en rotation l'arbre de sortie 20. En outre, l'arbre de sortie 20 de l'actionneur électromécanique 11 entraîne en rotation le tube d'enroulement 4 par l'intermédiaire de l'élément de liaison 22.

Ainsi, le tube d'enroulement 4 entraîne en rotation l'écran 2 du dispositif d'occultation 3, de sorte à ouvrir ou fermer l'ouverture 1.

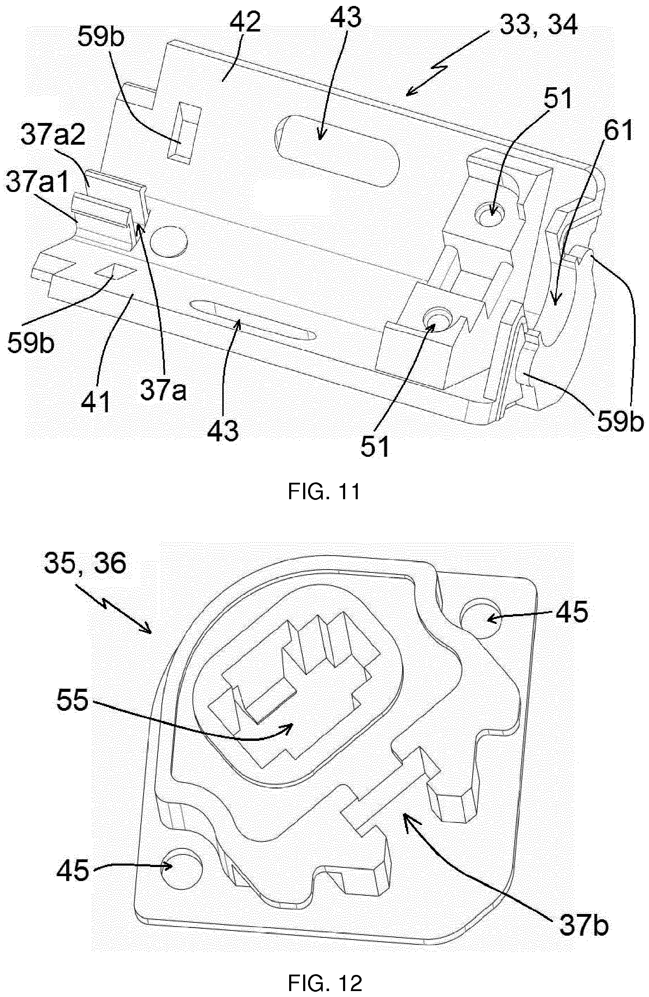

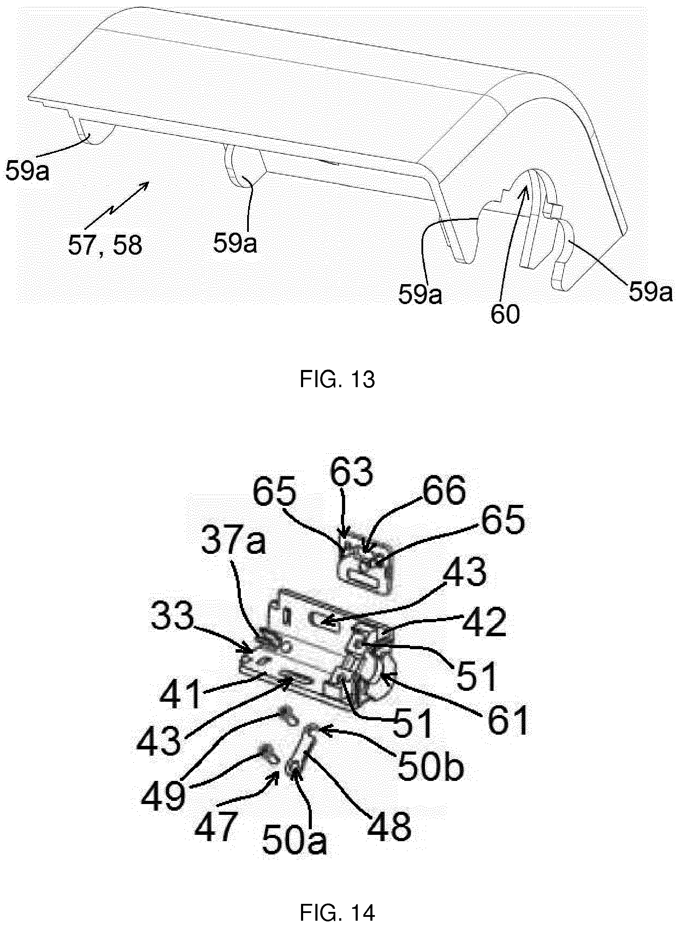

On décrit à présent, en référence aux figures 4 à 14, le dispositif d'entraînement motorisé 5 pour l'installation domotique de fermeture ou de protection solaire des figures 1 à 5, ce dispositif étant conforme à un mode de réalisation de l'invention.

Le dispositif d'entraînement motorisé 5 comprend le dispositif d'alimentation en énergie électrique autonome 26. Le dispositif d'alimentation en énergie électrique autonome 26 comprend le dispositif de stockage d'énergie électrique 24 et, éventuellement, la cellule photovoltaïque 25.

Ainsi, le dispositif d'alimentation en énergie électrique autonome 26 permet d'alimenter en énergie électrique l'actionneur électromécanique 11, sans être lui-même relié électriquement au réseau secteur.

L'actionneur électromécanique 11 est relié électriquement au dispositif de stockage d'énergie électrique 24. Et, plus particulièrement, l'unité électronique de contrôle 15 de l'actionneur électromécanique 11 est reliée électriquement au dispositif de stockage d'énergie électrique 24.

Le dispositif de stockage d'énergie électrique 24 comprend un boîtier 31, une batterie 32, un premier support 33 et un deuxième support 34.

La batterie 32 est disposée à l'intérieur du boîtier 31, dans une configuration assemblée du dispositif de stockage d'énergie électrique 24.

Le premier support 33 est disposé au niveau d'une première extrémité 31a du boîtier 31, dans la configuration assemblée du dispositif de stockage d'énergie électrique 24. Le deuxième support 34 est disposé au niveau d'une deuxième extrémité 31b du boîtier 31, dans la configuration assemblée du dispositif de stockage d'énergie électrique 24. La deuxième extrémité 31b du boîtier 31 est opposée à la première extrémité 31a du boîtier 31.

Le dispositif de stockage d'énergie électrique 24 comprend également un premier bouchon 35 et un deuxième bouchon 36. Le premier bouchon 35 est assemblé avec le boîtier 31 au niveau de la première extrémité 31a du boîtier 31, dans la configuration assemblée du dispositif de stockage d'énergie électrique 24. Le deuxième bouchon 36 est assemblé avec le boîtier 31 au niveau de la deuxième extrémité 31b du boîtier 31, dans la configuration assemblée du dispositif de stockage d'énergie électrique 24.

Chacun des premier et deuxième supports 33, 34 est assemblé avec l'un des premier et deuxième bouchons 35, 36 au moyen d'éléments de fixation par encliquetage élastique 37a, 37b, dans la configuration assemblée du dispositif de stockage d'énergie électrique 24.

Ainsi, un tel assemblage par encliquetage élastique permet un montage et un démontage simples, rapides et intuitifs du dispositif de stockage d'énergie électrique 24 et, plus particulièrement, du boîtier 31 et de la batterie 32 par rapport aux premier et deuxième supports 33, 34, de sorte à pouvoir remplacer ou recharger la batterie 32, sans nécessiter l'utilisation d'un outillage spécifique et sans engendrer de détérioration de l'installation domotique.

De cette manière, un tel assemblage par encliquetage élastique permet de simplifier une intervention de maintenance ou de réparation du dispositif de stockage d'énergie électrique 24, puisque les premier et deuxième supports 33, 34 restent en position par rapport à un élément 38, 6, 9, 39 de l'installation domotique.

L'élément 38, 6, 9, 39 de l'installation domotique peut être, notamment, un mur 38 d'un bâtiment, l'une des glissières latérales 6, le coffre 9 ou un cadre dormant 39 d'une fenêtre 40 ou d'une porte.

Par ailleurs, chacun des premier et deuxième bouchons 35, 36 permet de garantir une étanchéité au niveau de chacune des première et deuxième extrémités 31a, 31b du boîtier 31, en particulier vis-à-vis de la batterie 32 disposée à l'intérieur du boîtier 31, dans la configuration assemblée du dispositif de stockage d'énergie électrique 24.

Avantageusement, les éléments de fixation par encliquetage élastique 37a, 37b comprennent une languette 37a ménagée dans l'un des premier et deuxième supports 33, 34 configurée pour coopérer avec un logement 37b ménagé dans l'un des premier et deuxième bouchons 35, 36.

Ici, la languette 37a comprend deux bras flexibles 37a1, 37a2. Chaque bras flexible 37a1, 37a2 est configuré pour coopérer avec le logement 37b.

Avantageusement, chacun des premier et deuxième supports 33, 34 est configuré pour être fixé sur une paroi de l'élément 38, 6, 9, 39 de l'installation domotique au moyen d'au moins un élément de fixation, non représenté.

Ainsi, les premier et deuxième supports 33, 34 sont configurés pour être maintenus en position sur la paroi de l'élément 38, 6, 9, 39 de l'installation domotique, tout en permettant le montage et le démontage du boîtier 31 et de la batterie 32 par rapport aux premier et deuxième supports 33, 34 au moyen des éléments de fixation par encliquetage élastique 37a, 37b.

De cette manière, la batterie 32 peut être remplacée ou rechargée aisément, lors d'une intervention de de maintenance ou de réparation du dispositif de stockage d'énergie électrique 24.

L'élément de fixation de chacun des premier et deuxième supports 33, 34 sur la paroi de l'élément 38, 6, 9, 39 de l'installation domotique peut être, par exemple, une vis de fixation ou un rivet.

Le nombre et le type d'éléments de fixation de chacun des premier et deuxième supports sur la paroi de l'élément de l'installation domotique ne sont pas limitatifs.

Avantageusement, chacun des premier et deuxième supports 33, 34 est réalisé sous la forme d'une équerre.

Ainsi, les premier et deuxième supports 33, 34 permettent de garantir une installation du dispositif de stockage d'énergie électrique 24 dans tout type d'installation domotique de fermeture ou de protection solaire et dans toute configuration de celle-ci, en particulier sur le mur 38 ou dans un angle du mur 38 d'un bâtiment, le long de l'une des glissières latérales 6, sur une paroi ou dans un angle du coffre 9, plus particulièrement à l'intérieur ou à l'extérieur d'une paroi du coffre 9, ou sur le cadre dormant 39 de la fenêtre 40 ou d'une porte, ainsi que horizontalement ou verticalement.

En pratique, chacun des premier et deuxième supports 33, 34 comprend une première paroi 41 et une deuxième paroi 42. La première paroi 41 est perpendiculaire à la deuxième paroi 42, de sorte à former l'équerre. Chacune des première et deuxième parois 41, 42 de chacun des premier et deuxième supports 33, 34 est configurée pour coopérer avec la paroi de l'élément 38, 6, 9, 39 de l'installation domotique.

Avantageusement, chacune des première et deuxième parois 41, 42 de chacun des premier et deuxième supports 33, 34 comprend au moins un trou de passage 43. Le trou de passage 43 de chacune des première et deuxième parois 41, 42 est configuré pour coopérer avec l'élément de fixation de l'un des premier et deuxième supports 33, 34 avec la paroi de l'élément 38, 6, 9, 39 de l'installation domotique.

Avantageusement, l'assemblage du boîtier 31, équipé de la batterie 32 et des premier et deuxième bouchons 35, 36, par rapport aux premier et deuxième supports 33, 34 est mis en œuvre suite à la fixation des premier et deuxième supports 33, 34 sur la paroi de l'élément 38, 6, 9, 39 de l'installation domotique.

Avantageusement, la batterie 32 comprend au moins un élément de stockage d'énergie électrique, non représenté.

Ici, la batterie 32 comprend une pluralité d'éléments de stockage d'énergie électrique. Préférentiellement, les éléments de stockage d'énergie électrique sont reliés électriquement en série.

Le nombre d'éléments de stockage d'énergie électrique de la batterie n'est pas limitatif.

Avantageusement, la batterie 32 est étanche.

Ainsi, une telle batterie 32 permet de garantir l'installation du dispositif de stockage d'énergie électrique 24 de manière simple et fiable à l'extérieur d'un bâtiment ou du coffre 9.

Avantageusement, le boîtier 31 du dispositif de stockage d'énergie électrique 24 est réalisé sous la forme d'un profilé.

Ici, le boîtier 31 du dispositif de stockage d'énergie électrique 24 est réalisé en aluminium.

La matière du boîtier du dispositif de stockage d'énergie électrique n'est pas limitative et peut être différente. Il peut s'agir, en particulier, d'une matière plastique.

Avantageusement, chacun des premier et deuxième supports 33, 34 est disposé dans le prolongement du boîtier 31 du dispositif de stockage d'énergie électrique 24.

Ainsi, l'encombrement du dispositif de stockage d'énergie électrique 24 est limité.

Avantageusement, chacun des premier et deuxième bouchons 35, 36 est réalisé dans une matière plastique.

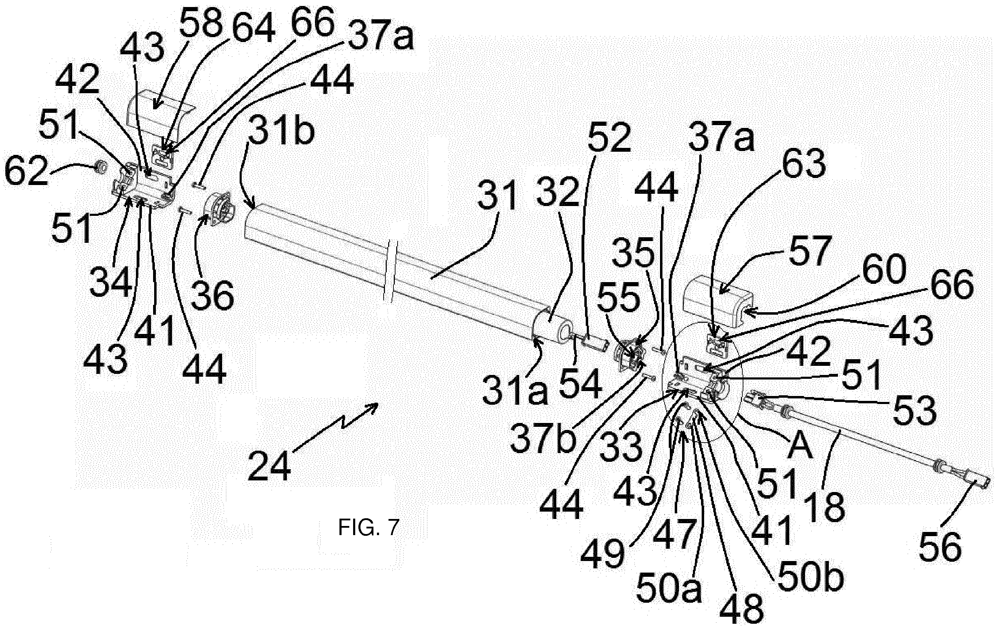

Avantageusement, chacun des premier et deuxième bouchons 35, 36 est fixé sur le boîtier 31 au moyen d'au moins un élément de fixation 44, en particulier deux dans l'exemple de réalisation illustré aux figures 7 à 10.

Chaque élément de fixation 44 de chacun des premier et deuxième bouchons 35, 36 sur le boîtier 31 peut être, par exemple, une vis de fixation.

Le nombre et le type d'éléments de fixation de chacun des premier et deuxième bouchons sur le boîtier ne sont pas limitatifs. Il peut s'agir, notamment, d'éléments de fixation par encliquetage élastique.

Avantageusement, chacun des premier et deuxième bouchons 35, 36 comprend un trou de passage 45 configuré pour coopérer avec chaque élément de fixation 44. En outre, le boîtier 31 comprend, au niveau de sa première extrémité 31a et de sa deuxième extrémité 31b, un trou de fixation 46 configuré pour coopérer avec chaque élément de fixation 44.

Avantageusement, les premier et deuxième supports 33, 34 sont symétriques par rapport au boîtier 31, dans la configuration assemblée du dispositif de stockage d'énergie électrique 24, et sont, plus particulièrement, identiques.

Ainsi, chacun des premiers et deuxièmes supports 33, 34 peut être monté, de manière réversible, au niveau de la première extrémité 31a ou de la deuxième extrémité 31b du boîtier 31, en particulier en fonction d'une position de montage de l'actionneur électromécanique 11 à une première extrémité ou à une deuxième extrémité du tube d'enroulement 4.

En outre, de tels premiers et deuxièmes supports 33, 34 symétriques permettent de simplifier l'installation du dispositif de stockage d'énergie électrique 24 par rapport à l'installation domotique.

Avantageusement, le dispositif de stockage d'énergie électrique 24 comprend également le câble d'alimentation électrique 18. Le premier support 33 ou le deuxième support 34 ou chacun des premier et deuxième supports 33, 34 comprend un serre-câble 47. En outre, le serre-câble 47 est configuré pour coopérer avec le câble d'alimentation électrique 18.

Ainsi, le câble d'alimentation électrique 18 est maintenu en position au moyen du premier support 33 ou du deuxième support 34 par rapport au dispositif de stockage d'énergie électrique 24, dans une configuration assemblée du dispositif d'entraînement motorisé 5.

En outre, le câble d'alimentation électrique 18 peut être maintenu en position par rapport à l'un des premier et deuxième supports 33, 34 au moyen du serre-câble 47, ainsi que par rapport à la paroi de l'élément 38, 6, 9, 39 de l'installation domotique, tout en permettant le démontage du boîtier 31 et de la batterie 32 par rapport aux premier et deuxième supports 33, 34 au moyen des éléments de fixation par encliquetage élastique 37a, 37b.

De cette manière, la batterie 32 peut être remplacée ou rechargée aisément, lors d'une intervention de maintenance ou de réparation du dispositif de stockage d'énergie électrique 24.

Avantageusement, le premier support 33 ou le deuxième support 34 ou chacun des premier et deuxième supports 33, 34 comprend une ouverture de passage 61 configurée pour coopérer avec le câble d'alimentation électrique 18.

Avantageusement, le serre-câble 47 comprend une languette 48, une première vis de fixation 49 et une deuxième vis de fixation 49. La languette 48 du serre-câble 47 comprend une première ouverture de passage 50a et une deuxième ouverture de passage 50b. Chacune des première et deuxième vis de fixation 49 est configurée pour coopérer, d'une part, avec l'une des première et deuxième ouvertures de passage 50a, 50b ménagées dans la languette 48 du serre-câble 47 et, d'autre part, avec un trou de fixation 51 ménagé dans l'un des premier et deuxième supports 33, 34.

Ici, la première ouverture de passage 50a de la languette 48 du serre-câble 47 est réalisée sous la forme d'un trou, en particulier de forme oblongue. En outre, la deuxième ouverture de passage 50b de la languette 48 du serre-câble 47 est réalisée sous la forme d'un crochet.

Ainsi, suite au dévissage des première et deuxième vis de fixation 49 par rapport aux trous de fixation 51 de l'un des premier et deuxième supports 33, 34, la languette 48 du serre-câble 47 peut être déplacée en rotation autour de l'une des première et deuxième vis de fixation 49 au moyen des première et deuxième ouvertures de passage 50a, 50b de la languette 48.

De cette manière, le câble d'alimentation d'électrique 18 peut être inséré à l'intérieur du serre-câble 47 ou retiré du serre-câble 47, tout en évitant de dévisser complètement les première et deuxième vis de fixation 49 du serre-câble 47 par rapport à l'un des premier et deuxième supports 33, 34.

Par conséquent, le serrage et le desserrage du serre-câble 47 peut être mis en œuvre, tout en évitant de perdre la languette 48 et les première et deuxième vis de fixation 49 du serre-câble 47.

Avantageusement, au moins l'un des premier et deuxième bouchons 35, 36 comprend un connecteur électrique 52 configuré pour coopérer avec un premier connecteur électrique 53 du câble d'alimentation électrique 18.

Ainsi, le premier connecteur électrique 53 du câble d'alimentation électrique 18 peut être déconnecté du connecteur électrique 52 de l'un des premier et deuxième bouchons 35, 36, lors d'une intervention de maintenance ou de réparation du dispositif de stockage d'énergie électrique 24, en particulier pour le remplacement ou la recharge de la batterie 32.

De cette manière, la déconnexion du premier connecteur électrique 53 du câble d'alimentation électrique 18 par rapport au connecteur électrique 52 de l'un des premier et deuxième bouchons 35, 36 permet de retirer le boîtier 31 et la batterie 32 par rapport aux premier et deuxième supports 33, 34, tout en maintenant en position le câble d'alimentation électrique 18 par rapport à l'un des premier et deuxième supports 33, 34 au moyen du serre-câble 47.

En outre, le câble d'alimentation électrique 18 peut être déconnecté et connecté de l'un des premier et deuxième bouchons 35, 36, lors d'une opération de configuration du dispositif d'entraînement motorisé 5.

Avantageusement, le connecteur électrique 52 de l'un des premier et deuxième bouchons 35, 36 est relié électriquement à la batterie 32, en particulier au moyen d'un câble électrique 54.

En pratique, le connecteur électrique 52 est disposé au moins en partie à l'intérieur d'un logement 55 de l'un des premier et deuxième bouchons 35, 36.

Avantageusement, le premier bouchon 35 ou le deuxième bouchon 36 ou chacun des premier et deuxième bouchons 35, 36 comprend un connecteur électrique 52.

Avantageusement, le câble d'alimentation électrique 18 comprend un deuxième connecteur électrique 56 configuré pour coopérer avec un connecteur électrique, non représenté, de l'actionneur électromécanique 11.

Ainsi, lorsque le premier connecteur électrique 53 du câble d'alimentation électrique 18 est connecté électriquement avec le connecteur électrique 52 de l'un des premier et deuxième bouchons 35, 36 et lorsque le deuxième connecteur électrique 56 du câble d'alimentation électrique 18 est connecté électriquement avec le connecteur électrique de l'actionneur électromécanique 11, le dispositif de stockage d'énergie électrique 24 est relié électriquement à l'actionneur électromécanique 11.

Avantageusement, le premier connecteur électrique 53 du câble d'alimentation électrique 18 est connecté électriquement au connecteur électrique 52 de l'un des premier et deuxième bouchons 35, 36, suite au passage du câble d'alimentation électrique 18 à l'intérieur du serre-câble 47 du premier support 33 ou du deuxième support 34.

Avantageusement, le dispositif de stockage d'énergie électrique 24 comprend également un premier capot 57 et un deuxième capot 58. Chacun des premier et deuxième capots 57, 58 est configuré pour coopérer avec l'un des premier et deuxième supports 33, 34.

En outre, le premier capot 57 est disposé au niveau de la première extrémité 31a du boîtier 31, dans la configuration assemblée du dispositif de stockage d'énergie électrique 24. Le deuxième capot 58 est disposé au niveau de la deuxième extrémité 31b du boîtier 31, dans la configuration assemblée du dispositif de stockage d'énergie électrique 24.

De cette manière, chacun des premier et deuxième capots 57, 58 permet de masquer l'un des premier et deuxième supports 33, 34, de sorte à améliorer l'aspect esthétique du dispositif de stockage d'énergie électrique 24 et à protéger la batterie 32, ainsi que la connexion électrique de celle-ci avec le câble d'alimentation électrique 18.

En outre, les premier et deuxième capots 57, 58 permettent d'éviter un retrait involontaire du boîtier 31 et de la batterie 32 par rapport aux premier et deuxième supports 33, 34, en particulier par le désengagement des éléments de fixation par encliquetage élastique 37a, 37b reliant chacun des premier et deuxième bouchons 35, 36 à l'un des premier et deuxième supports 33, 34.

Avantageusement, chacun des premier et deuxième capots 57, 58 est amovible par rapport à l'un des premier et deuxième supports 33, 34.

Avantageusement, chacun des premier et deuxième capots 57, 58 est assemblé avec l'un des premier et deuxième supports 33, 34 au moyen d'éléments de fixation par encliquetage élastique 59a, 59b.

Ici, les éléments de fixation par encliquetage élastique 59a, 59b sont prévus respectivement sur le premier ou deuxième capot 57, 58 et sur le premier ou deuxième support 33, 34.

Avantageusement, chacun des premier et deuxième bouchons 35, 36 est configuré pour coopérer avec l'un des premier et deuxième capots 57, 58, en particulier pour être recouvert par l'un des premier et deuxième capots 57, 58 et être logé à l'intérieur de l'un des premier et deuxième capots 57, 58.

Avantageusement, le premier capot 57 ou le deuxième capot 58 ou chacun des premier et deuxième capots 57, 58 comprend une ouverture de passage 60 configurée pour coopérer avec le câble d'alimentation électrique 18.

Ici, le dispositif de stockage d'énergie électrique 24 comprend également un élément d'obturation 62 configuré pour coopérer avec l'ouverture de passage 60 de l'un des premier et deuxième capots 57, 58, en particulier le deuxième capot 58 positionné du côté opposé au câble d'alimentation électrique 18, autrement dit le deuxième capot 58 ne coopérant pas avec le câble d'alimentation électrique 18, dans la configuration assemblée du dispositif de stockage d'énergie électrique 24.

Avantageusement, le dispositif de stockage d'énergie électrique 24 comprend également une première cale 63 et une deuxième cale 64. Chacune des première et deuxième cales 63, 64 est configurée pour coopérer avec l'un des premier et deuxième supports 33, 34.

Ainsi, les première et deuxième cales 63, 64 permettent de décaler le dispositif de stockage d'énergie électrique 24 et, plus particulièrement, le boîtier 31 par rapport à la paroi de l'élément 38, 6, 9, 39 de l'installation domotique, en particulier dans le cas où la paroi de l'élément 38, 6, 9, 39 de l'installation domotique présente des imperfections ou des aspérités.

Avantageusement, chacune des première et deuxième cales 63, 64 est configurée pour être fixée à l'un des premier et deuxième supports 33, 34 au moyen d'éléments de fixation 65.

Les éléments de fixation 65 de chacune des première et deuxième cales 63, 64 sur l'un des premier et deuxième supports 33, 34 peuvent être, par exemple, des éléments de fixation par encliquetage élastique, notamment au nombre de deux.

Ici, chaque élément de fixation 65 est configuré pour coopérer et, plus particulièrement, s'engager dans le trou de passage 43 de l'une des première et deuxième parois 41, 42 de l'un des premier et deuxième supports 33, 34.

Le nombre et le type d'éléments de fixation de chacune des première et deuxième cales sur l'un des premier et deuxième supports ne sont pas limitatifs.

Avantageusement, chacune des première et deuxième cales 63, 64 comprend au moins une ouverture de passage 66 d'au moins un élément de fixation de chacun des premier et deuxième supports 33, 34 sur la paroi de l'élément 38, 6, 9, 39 de l'installation domotique.

Avantageusement, le dispositif de stockage d'énergie électrique 24 est de type rechargeable et est configuré pour alimenter en énergie électrique l'actionneur électromécanique 11. En outre, le dispositif de stockage d'énergie électrique 24 est configuré pour être alimenté en énergie électrique par la cellule photovoltaïque 25.

Ainsi, le rechargement du dispositif de stockage d'énergie électrique 24 est mis en œuvre par énergie solaire au moyen de la cellule photovoltaïque 25.

De cette manière, le dispositif de stockage d'énergie électrique 24 peut être rechargé sans avoir à démonter une partie du coffre 9 du dispositif d'occultation 3.

Avantageusement, le dispositif d'entraînement motorisé 5 et, en particulier, la cellule photovoltaïque 25 comprend des éléments de chargement configurés pour charger la batterie 32 du dispositif de stockage d'énergie électrique 24 à partir de l'énergie solaire récupérée par la cellule photovoltaïque 25.

Ainsi, les éléments de chargement configurés pour charger la batterie 32 du dispositif de stockage d'énergie électrique 24 à partir de l'énergie solaire permettent de convertir l'énergie solaire récupérée par la cellule photovoltaïque 25 en énergie électrique.

Dans un mode de réalisation, le dispositif d'alimentation en énergie électrique autonome 26 comprend une pluralité de cellules photovoltaïques 25 constituant un panneau photovoltaïque.

Avantageusement, l'alimentation en énergie électrique de l'actionneur électromécanique 11 par le dispositif de stockage d'énergie électrique 24 est configurée pour se substituer à une alimentation en énergie électrique de l'actionneur électromécanique 11 par un réseau d'alimentation en énergie électrique.

Ainsi, l'alimentation en énergie électrique de l'actionneur électromécanique 11 par le dispositif de stockage d'énergie électrique 24 permet de s'affranchir d'un raccordement au réseau d'alimentation en énergie électrique.

En variante, non représentée, l'alimentation en énergie électrique de l'actionneur électromécanique 11 est mise en œuvre, d'une part, par le dispositif de stockage d'énergie électrique 24 et, d'autre part, par un réseau d'alimentation en énergie électrique.

Ainsi, l'actionneur électromécanique 11 est alors alimenté en énergie électrique soit par le dispositif de stockage d'énergie électrique 24 soit par le réseau d'alimentation en énergie électrique.

Dans ce cas, l'alimentation en énergie électrique de l'actionneur électromécanique 11 par le dispositif de stockage d'énergie électrique 24 peut permettre, notamment, de suppléer à une coupure d'alimentation en énergie électrique de l'actionneur électromécanique 11 par un réseau d'alimentation en énergie électrique.

En outre, l'alimentation en énergie électrique de l'actionneur électromécanique 11 par le réseau d'alimentation en énergie électrique permet de recharger le dispositif de stockage d'énergie électrique 24, en particulier lorsque le dispositif de stockage d'énergie électrique 24 est insuffisamment rechargé par la cellule photovoltaïque 25.

Avantageusement, la cellule photovoltaïque 25 est reliée électriquement au dispositif de stockage d'énergie électrique 24 directement ou par l'intermédiaire de l'actionneur électromécanique 11.

Grâce à la présente invention, un tel assemblage par encliquetage élastique permet un montage et un démontage simples, rapides et intuitifs du dispositif de stockage d'énergie électrique et, plus particulièrement, du boîtier et de la batterie par rapport aux premier et deuxième supports, de sorte à pouvoir remplacer ou recharger la batterie, sans nécessiter l'utilisation d'un outillage spécifique et sans engendrer de détérioration de l'installation domotique.

De cette manière, un tel assemblage par encliquetage élastique permet de simplifier une intervention de maintenance ou de réparation du dispositif de stockage d'énergie électrique, puisque les premier et deuxième supports restent en position par rapport à un élément de l'installation domotique.

De nombreuses modifications peuvent être apportées aux exemples de réalisation décrits précédemment sans sortir du cadre de l'invention défini par les revendications.

En outre, les modes de réalisation et variantes envisagés peuvent être combinés pour générer de nouveaux modes de réalisation de l'invention, sans sortir du cadre de l'invention défini par les revendications.

## Revendications

1. Dispositif de stockage d'énergie électrique (24) pour une installation domotique de fermeture ou de protection solaire, le dispositif de stockage d'énergie électrique (24) comprenant au moins :
- un boîtier (31),
- une batterie (32), la batterie (32) étant disposée à l'intérieur du boîtier (31), dans une configuration assemblée du dispositif de stockage d'énergie électrique (24),
- un premier support (33), le premier support (33) étant disposé au niveau d'une première extrémité (31a) du boîtier (31), dans la configuration assemblée du dispositif de stockage d'énergie électrique (24),
- un premier bouchon (35) et un deuxième bouchon (36), le premier bouchon (35) étant assemblé avec le boîtier (31) au niveau de la première extrémité (31a) du boîtier (31), dans la configuration assemblée du dispositif de stockage d'énergie électrique (24), le deuxième bouchon (36) étant assemblé avec le boîtier (31) au niveau de la deuxième extrémité (31b) du boîtier (31), dans la configuration assemblée du dispositif de stockage d'énergie électrique (24),
**caractérisé en ce que** le dispositif de stockage d'énergie électrique (24) comprend également un deuxième support (34), le deuxième support (34) étant disposé au niveau d'une deuxième extrémité (31b) du boîtier (31), dans la configuration assemblée du dispositif de stockage d'énergie électrique (24), la deuxième extrémité (31b) du boîtier (31) étant opposée à la première extrémité (31a) du boîtier (31),
et **en ce que** chacun des premier et deuxième supports (33, 34) est assemblé avec l'un des premier et deuxième bouchons (35, 36) au moyen d'éléments de fixation par encliquetage élastique (37a, 37b), dans la configuration assemblée du dispositif de stockage d'énergie électrique (24).

2. Dispositif de stockage d'énergie électrique (24) pour une installation domotique de fermeture ou de protection solaire selon la revendication 1, **caractérisé en ce que** les éléments de fixation par encliquetage élastique (37a, 37b) comprennent une languette (37a) ménagée dans l'un des premier et deuxième supports (33, 34) configurée pour coopérer avec un logement (37b) ménagé dans l'un des premier et deuxième bouchons (35, 36).

3. Dispositif de stockage d'énergie électrique (24) pour une installation domotique de fermeture ou de protection solaire selon la revendication 1 ou selon la revendication 2, **caractérisé en ce que** chacun des premier et deuxième supports (33, 34) est réalisé sous la forme d'une équerre.

4. Dispositif de stockage d'énergie électrique (24) pour une installation domotique de fermeture ou de protection solaire selon l'une quelconque des revendications 1 à 3, **caractérisé en ce que** les premier et deuxième supports (33, 34) sont symétriques par rapport au boîtier (31), dans la configuration assemblée du dispositif de stockage d'énergie électrique (24).

5. Dispositif de stockage d'énergie électrique (24) pour une installation domotique de fermeture ou de protection solaire selon l'une quelconque des revendications 1 à 4, **caractérisé en ce que** le dispositif de stockage d'énergie électrique (24) comprend également un câble d'alimentation électrique (18) et **en ce qu'**au moins l'un des premier et deuxième bouchons (35, 36) comprend un connecteur électrique (52) configuré pour coopérer avec un premier connecteur électrique (53) du câble d'alimentation électrique (18).

6. Dispositif de stockage d'énergie électrique (24) pour une installation domotique de fermeture ou de protection solaire selon la revendication 5, **caractérisé en ce que** le premier support (33) ou le deuxième support (34) ou chacun des premier et deuxième supports (33, 34) comprend un serre-câble (47), et **en ce que** le serre-câble (47) est configuré pour coopérer avec le câble d'alimentation électrique (18).

7. Dispositif de stockage d'énergie électrique (24) pour une installation domotique de fermeture ou de protection solaire selon l'une quelconque des revendications 1 à 6, **caractérisé en ce que** le dispositif de stockage d'énergie électrique (24) comprend également un premier capot (57) et un deuxième capot (58), et **en ce que** chacun des premier et deuxième capots (57, 58) est configuré pour coopérer avec l'un des premier et deuxième supports (33, 34), le premier capot (57) étant disposé au niveau de la première extrémité (31a) du boîtier (31), dans la configuration assemblée du dispositif de stockage d'énergie électrique (24), le deuxième capot (58) étant disposé au niveau de la deuxième extrémité (31b) du boîtier (31), dans la configuration assemblée du dispositif de stockage d'énergie électrique (24).

8. Dispositif de stockage d'énergie électrique (24) pour une installation domotique de fermeture ou de protection solaire selon l'une quelconque des revendications 1 à 7, **caractérisé en ce que** chacun des premier et deuxième supports (33, 34) est configuré pour être fixé sur une paroi d'un élément (38, 6, 9, 39) de l'installation domotique au moyen d'au moins un élément de fixation.

9. Dispositif d'entraînement motorisé (5) pour une installation domotique de fermeture ou de protection solaire comprenant au moins :
- un actionneur électromécanique (11),
- un dispositif d'alimentation en énergie électrique autonome (26), le dispositif d'alimentation en énergie électrique autonome (26) comprenant au moins un dispositif de stockage d'énergie électrique (24) selon l'une quelconque des revendications 1 à 8, l'actionneur électromécanique (11) étant relié électriquement au dispositif de stockage d'énergie électrique (24).

10. Installation domotique de fermeture ou de protection solaire comprenant un écran (2) enroulable, au moyen d'un dispositif d'entraînement motorisé (5), sur un tube d'enroulement (4) entraîné en rotation par un actionneur électromécanique (11), **caractérisée en ce que** le dispositif d'entraînement motorisé (5) est conforme à la revendication 9.

11. Installation domotique de fermeture ou de protection solaire selon la revendication 10, **caractérisée en ce que** la paroi de l'élément (38, 6, 9, 39) de l'installation domotique est un mur (38) d'un bâtiment, une glissière latérale (6) d'un dispositif d'occultation (3), un coffre (9) d'un dispositif d'occultation (3) ou un cadre dormant (39) d'une fenêtre (40) ou d'une porte.

## Patentansprüche

1. Speichervorrichtung für elektrische Energie (24) für eine Haustechnikanlage zum Schließen oder Sonnenschutz, die Speichervorrichtung für elektrische Energie (24) mindestens umfassend:
- ein Gehäuse (31),
- eine Batterie (32), wobei die Batterie (32) in einer zusammengebauten Konfiguration der Speichervorrichtung für elektrische Energie (24) im Inneren des Gehäuses (31) angeordnet ist,
- eine erste Halterung (33), wobei die erste Halterung (33) in der zusammengebauten Konfiguration der Speichervorrichtung für elektrische Energie (24) an einem ersten Ende (31a) des Gehäuses (31) angeordnet ist,
- eine erste Kappe (35) und eine zweite Kappe (36), wobei die erste Kappe (35) in der zusammengebauten Konfiguration der Speichervorrichtung für elektrische Energie (24) an dem ersten Ende (31a) des Gehäuses (31) mit dem Gehäuse (31) zusammengebaut ist, wobei die zweite Kappe (36) in der zusammengebauten Konfiguration der Speichervorrichtung für elektrische Energie (24) an dem zweiten Ende (31b) des Gehäuses (31) mit dem Gehäuse (31) zusammengebaut ist,
**dadurch gekennzeichnet, dass** die Speichervorrichtung für elektrische Energie (24) auch eine zweite Halterung (34) umfasst, wobei die zweite Halterung (34) in der zusammengebauten Konfiguration der Speichervorrichtung für elektrische Energie (24) an einem zweiten Ende (31b) des Gehäuses (31) angeordnet ist, wobei das zweite Ende (31b) des Gehäuses (31) gegenüber dem ersten Ende (31a) des Gehäuses (31) ist,
und dass jede von der ersten und der zweiten Halterung (33, 34) in der zusammengebauten Konfiguration der Speichervorrichtung für elektrische Energie (24) mittels elastischer Rastbefestigungselemente (37a, 37b) mit einer von der ersten und der zweiten Kappe (35, 36) zusammengebaut ist.

2. Speichervorrichtung für elektrische Energie (24) für eine Haustechnikanlage zum Schließen oder Sonnenschutz nach Anspruch 1, **dadurch gekennzeichnet, dass** die elastischen Rastbefestigungselemente (37a, 37b) eine in einer der ersten und zweiten Halterungen (33, 34) ausgebildete Zunge (37a) umfassen, die konfiguriert ist, um mit einer in einer der ersten und zweiten Kappen (35, 36) gebildeten Aufnahme (37b) zusammenzuwirken.

3. Speichervorrichtung für elektrische Energie (24) für eine Haustechnikanlage zum Schließen oder Sonnenschutz nach Anspruch 1 oder nach Anspruch 2, **dadurch gekennzeichnet, dass** jede von der ersten und der zweiten Halterung (33, 34) in Form eines Winkels ausgeführt ist.

4. Speichervorrichtung für elektrische Energie (24) für eine Haustechnikanlage zum Schließen oder Sonnenschutz nach einem der Ansprüche 1 bis 3, **dadurch gekennzeichnet, dass** die erste und die zweite Halterung (33, 34) in der zusammengebauten Konfiguration der Speichervorrichtung für elektrische Energie (24) symmetrisch zu dem Gehäuse (31) sind.

5. Speichervorrichtung für elektrische Energie (24) für eine Haustechnikanlage zum Schließen oder Sonnenschutz nach einem der Ansprüche 1 bis 4, **dadurch gekennzeichnet, dass** die Speichervorrichtung für elektrische Energie (24) auch ein Stromversorgungskabel (18) umfasst und dass mindestens eine von der ersten und der zweiten Kappe (35, 36) einen elektrischen Verbinder (52) umfasst, der konfiguriert ist, um mit einem ersten elektrischen Verbinder (53) des Stromversorgungskabels (18) zusammenzuwirken.

6. Speichervorrichtung für elektrische Energie (24) für eine Haustechnikanlage zum Schließen oder Sonnenschutz nach Anspruch 5, **dadurch gekennzeichnet, dass** die erste Halterung (33) oder die zweite Halterung (34) oder jede von der ersten und der zweiten Halterung (33, 34) eine Kabelklemme (47) umfasst, und dass die Kabelklemme (47) konfiguriert ist, um mit dem Stromversorgungskabel (18) zusammenzuwirken.

7. Speichervorrichtung für elektrische Energie (24) für eine Haustechnikanlage zum Schließen oder Sonnenschutz nach einem der Ansprüche 1 bis 6, **dadurch gekennzeichnet, dass** die Speichervorrichtung für elektrische Energie (24) auch eine erste Abdeckung (57) und eine zweite Abdeckung (58) umfasst, und dass jede von der ersten und der zweiten Abdeckung (57, 58) konfiguriert ist, um mit einer von der ersten und der zweiten Halterung (33, 34) zusammenzuwirken, wobei die erste Abdeckung (57) in der zusammengebauten Konfiguration der Speichervorrichtung für elektrische Energie (24) an dem ersten Ende (31a) des Gehäuses (31) angeordnet ist, und die zweite Abdeckung (58) in der zusammengebauten Konfiguration der Speichervorrichtung für elektrische Energie (24) an dem zweiten Ende (31b) des Gehäuses (31) angeordnet ist.

8. Speichervorrichtung für elektrische Energie (24) für eine Haustechnikanlage zum Schließen oder Sonnenschutz nach einem der Ansprüche 1 bis 7, **dadurch gekennzeichnet, dass** jede von der ersten und der zweiten Halterung (33, 34) konfiguriert ist, um mittels mindestens eines Befestigungselements an einer Wand eines Elements (38, 6, 9, 39) der Haustechnikanlage befestigt zu werden.

9. Motorisierte Antriebsvorrichtung (5) für eine Haustechnikanlage zum Schließen oder Sonnenschutz, mindestens umfassend:
- einen elektromechanischen Aktuator (11),
- eine autonome Speichervorrichtung für elektrische Energie (26), wobei die autonome Speichervorrichtung für elektrische Energie (26) mindestens eine Speichervorrichtung für elektrische Energie (24) nach einem der Ansprüche 1 bis 8 umfasst, wobei der elektromechanische Aktuator (11) elektrisch mit der Speichervorrichtung für elektrische Energie (24) verbunden ist.

10. Haustechnikanlage zum Schließen oder Sonnenschutz, umfassend einen Schirm (2), der mittels einer motorisierten Antriebsvorrichtung (5) auf ein Wickelrohr (4) aufrollbar ist, das von einem elektromechanischen Aktuator (11) in Drehung versetzt wird, **dadurch gekennzeichnet, dass** die motorisierte Antriebsvorrichtung (5) dem Anspruch 9 entspricht.

11. Haustechnikanlage zum Schließen oder Sonnenschutz nach Anspruch 10, **dadurch gekennzeichnet, dass** die Wand des Elements (38, 6, 9, 39) der Haustechnikanlage eine Wand (38) eines Gebäudes, eine Seitenführung (6) einer Abdeckvorrichtung (3), ein Kasten (9) einer Abdeckvorrichtung (3) oder ein Blendrahmen (39) eines Fensters (40) oder einer Tür ist.

## Claims

1. An electrical energy storage device (24) for a home automation closure or solar protection installation, the electrical energy storage device (24) comprising at least:
- a casing (31),
- a battery (32), the battery (32) being disposed within the casing (31), in an assembled configuration of the electrical energy storage device (24),
- a first support (33), the first support (33) being disposed at a first end (31a) of the casing (31), in the assembled configuration of the electrical energy storage device (24),
- a first plug (35) and a second plug (36), the first plug (35) being assembled with the casing (31) at the first end (31a) of the casing (31), in the assembled configuration of the electrical energy storage device (24), the second plug (36) being assembled with the casing (31) at the second end (31b) of the casing (31) in the assembled configuration of the electrical energy storage device (24),
**characterised in that** the electrical energy storage device (24) also comprises a second support (34), the second support (34) being disposed at a second end (31b) of the casing (31), in the assembled configuration of the electrical energy storage device (24), the second end (31b) of the casing (31) being opposite the first end (31a) of the casing (31),
and **in that** each of the first and second supports (33, 34) is assembled with one of the first and second plugs (35, 36) by means of elastic snap-fastening elements (37a, 37b), in the assembled configuration of the electrical energy storage device (24).

2. An electrical energy storage device (24) for a home automation closure or solar protection installation according to Claim 1, **characterised in that** the snap-fastening elements (37a, 37b) comprise a tongue (37a) formed in one of the first and second supports (33, 34) configured to cooperate with a housing (37b) formed in one of the first and second plugs (35, 36).

3. An electrical energy storage device (24) for a home automation closure or solar protection installation according to Claim 1 or according to Claim 2, **characterised in that** each of the first and second supports (33, 34) is in the form of a 90° angle.

4. An electrical energy storage device (24) for a home automation closure or solar protection installation according to any one of Claims 1 to 3, **characterised in that** the first and second supports (33, 34) are symmetrical with respect to the casing (31), in the assembled configuration of the electrical energy storage device (24).

5. An electrical energy storage device (24) for a home automation closure or solar protection installation according to any one of Claims 1 to 4, **characterised in that** the electrical energy storage device (24) also comprises an electrical power supply cable (18) and **in that** at least one of the first and second plugs (35, 36) comprises an electrical connector (52) configured to cooperate with a first electrical connector (53) of the electrical power supply cable (18).

6. An electrical energy storage device (24) for a home automation closure or solar protection installation according to Claim 5, **characterised in that** the first support (33) or the second support (34) or each of the first and second supports (33, 34) comprises a cable clamp (47), and **in that** the cable clamp (47) is configured to cooperate with the power supply cable (18).

7. An electrical energy storage device (24) for a home automation closure or solar protection installation according to any one of Claims 1 to 6, **characterised in that** the electrical energy storage device (24) also comprises a first cover (57) and a second cover (58), and **in that** each of the first and second covers (57, 58) is configured to cooperate with one of the first and second supports (33, 34), the first cover (57) being arranged at the first end (31a) of the casing (31), in the assembled configuration of the electrical energy storage device (24), the second cover (58) being arranged at the second end (31b) of the casing (31), in the assembled configuration of the electrical energy storage device (24).

8. An electrical energy storage device (24) for a home automation closure or solar protection installation according to any one of Claims 1 to 7, **characterised in that** each of the first and second supports (33, 34) is configured so as to be fixed to a wall of an element (38, 6, 9, 39) of the home automation installation by means of at least one fixing element.

9. A motorised drive device (5) for a home automation closure or solar protection installation comprising at least:
- an electromechanical actuator (11),
- an autonomous electrical energy supply device (26), the autonomous electrical energy supply device (26) comprising at least one electrical energy storage device (24) according to any one of Claims 1 to 8, the electromechanical actuator (11) being electrically connected to the electrical energy storage device (24).

10. A home automation installation for closure or solar protection comprising a screen (2) which can be rolled up, by means of a motorised drive device (5), on a winding tube (4) driven in rotation by an electromechanical actuator (11), **characterised in that** the motorised drive device (5) is in accordance with Claim 9.

11. A home automation installation for closure or solar protection according to Claim 10, **characterised in that** the wall of the element (38, 6, 9, 39) of the home automation system is a wall (38) of a building, a lateral slide (6) of an occultation device (3), a casing (9) of an occultation device (3) or a fixed frame (39) of a window (40) or of a door.
